# EUROPEAN PATENT SPECIFICATION

(11) **EP 4 478 639 B1**
(45) Date of publication and mention of the grant of the patent: **13.05.2026**
(21) Application number: 24181373.2
(22) Date of filing: 11.06.2024
(51) Int. Cl.: H04L 1/1825, H04L 1/1867, G08B 17/00, G08B 25/00, G08B 29/18

(54) **WIRELESS TERMINAL APPARATUS, FIRE ALARM**
DRAHTLOSES ENDGERÄT, BRANDMELDER
APPAREIL TERMINAL SANS FIL, ALARME D'INCENDIE

(30) Priority: 12.06.2023 JP 2023096550
(43) Date of publication of application: 18.12.2024
(73) Proprietor: Panasonic Intellectual Property Management Co., Ltd., Kadoma-shi, Osaka 571-0057 (JP)
(72) Inventor: SUGAWARA, Takayuki, Kadoma-shi, Osaka, 571-0057 (JP); NAGAI, Shoji, Kadoma-shi, Osaka, 571-0057 (JP); AOYAMA, Keiichi, Kadoma-shi, Osaka, 571-0057 (JP); MORINO, Makoto, Kadoma-shi, Osaka, 571-0057 (JP); HAKATA, Shogo, Kadoma-shi, Osaka, 571-0057 (JP); MIYAKE, Takaaki, Kadoma-shi, Osaka, 571-0057 (JP); OOUCHIDA, Hiroshi, Kadoma-shi, Osaka, 571-0057 (JP)
(74) Representative: Appelt, Christian W.

(56) References cited:
- US-A1- 2014 122 956
- KIM SEOHYANG ET AL: "ALICE: Autonomous Link-based Cell Scheduling for TSCH", 2019 18TH ACM/IEEE INTERNATIONAL CONFERENCE ON INFORMATION PROCESSING IN SENSOR NETWORKS (IPSN), ACM, 15 April 2019 (2019-04-15), pages 121 - 132, XP033559606, DOI: 10.1145/3302506.3310394

## Description

### [TECHNICAL FIELD]

The present disclosure relates to communication technology and, particularly to a wireless terminal apparatus and a fire alarm that receive a response to a signal when the signal is transmitted.

### [BACKGROUND ART]

An alarm system for detecting an abnormality such as heat and smoke generated in a room, etc. includes a plurality of alarms. The alarm system performs an alarm operation in conjunction with each other by bidirectional communication between a plurality of alarms. In the alarm system, a confirmation is made to see whether any abnormality has occurred, by periodically exchanging signals between a plurality of alarms during monitoring. To reduce the power consumed in periodic transmission in which signals are periodically exchanged between a plurality of alarms during monitoring, a communication abnormality is confirmed when a signal cannot be received over a certain period of time (see, for example, Patent Literature 1).
Document "ALICE: Autonomous Link-based Cell Scheduling for TSCH", (KIM SEOHYANG ET AL, 2019 18TH ACM/IEEE INTERNATIONAL CONFERENCE ON INFORMATION PROCESSING IN SENSOR NETWORKS, pages 121-132) discloses an autonomous link-based cell scheduling scheme.
US 2014/122956 A1 discloses a message retransmission apparatus.

### [RELATED-ART LITERATURE]

### [PATENT LITERATURE]

[Patent Literature 1] JP2012-88957

### [SUMMARY OF INVENTION]

### [TECHNICAL PROBLEM]

In an alarm system capable of bidirectional communication, a plurality of battery-powered alarms (fire alarms) are, for example, connected to a gateway driven by a power supply, and the gateway performs wireless communication with each fire alarm. In the aforementioned periodic transmission, the fire alarm periodically transmits a notification signal (status notification signal) to the gateway, and the gateway that receives the notification signal transmits a response signal to the fire alarm. When the fire alarm does not receive the response signal from the gateway that the notification signal is sent to, the fire alarm retransmits the notification signal. When retransmission of the notification signal is repeated, the power consumption of the fire alarm will increase, and the battery life will be shortened. When retransmission of the notification signal is stopped to reduce the power consumption, on the other hand, the reliability of the alarm system will decrease.

The present disclosure addresses the issue described above, and a purpose thereof is to provide a technology that suppresses a decrease in reliability while reducing the power consumption at the same time.

### [SOLUTION TO PROBLEM]

A wireless terminal apparatus according to the present invention is defined in independent claim 1. Preferred embodiments are defined in dependent claims 2 to 4.

### [ADVANTAGEOUS EFFECTS OF INVENTION]

According to the present disclosure, it is possible to suppress a decrease in reliability while reducing the power consumption at the same time.

### [BRIEF DESCRIPTION OF THE DRAWINGS]

Embodiments will now be described by way of examples only, with reference to the accompanying drawings which are meant to be exemplary, not limiting and wherein like elements are numbered alike in several Figures in which:
Fig. 1 shows a configuration of an alarm system according to exemplary embodiment 1;
Fig. 2 shows a configuration of the fire alarm of Fig. 1;
Figs. 3A-3B show an outline of an operation of the alarm system of Fig. 1;
Figs. 4A-4B show an outline of another operation of the alarm system of Fig. 1;
Fig. 5 is a flowchart showing steps of an operation performed by the fire alarm of Fig. 2;
Fig. 6 shows an outline of an operation in the alarm system according to exemplary embodiment 2;
Fig. 7 shows an outline of an operation in the alarm system according to exemplary embodiment 3; and
Fig. 8 shows an outline of an operation in the alarm system according to exemplary embodiment 4.

### [DESCRIPTION OF EMBODIMENTS]

### (Exemplary embodiment 1)

A brief summary will be given before describing the present disclosure in specific details. The embodiment relates to an alarm system provided in a facility such as a multi-unit apartment building, an independent housing, an office, and a hospital. In the alarm system, a plurality of fire alarms are connected to a gateway. The gateway performs wireless communication with each fire alarm. When the fire alarm detects an outbreak of a fire, the fire alarm transmits a result of detection to the gateway. When the result of detection is received, the gateway selects one or more fire alarms that should output an alarm and transmits an instruction to output an alarm to the one or more selected fire alarms. The fire alarm outputs an alarm when the fire alarm receives the instruction to output an alarm.

In order to confirm whether an abnormality has occurred in such an alarm system, the fire alarm periodically transmits a notification signal to the gateway, as described above, and the gateway receiving the notification signal transmits a response signal to the fire alarm. When the fire alarm does not receive the response signal from the gateway that the notification signal is transmitted to, the fire alarm retransmits the notification signal. When retransmission of the notification signal is repeated, the power consumption of the fire alarm will increase, and the battery life will be shortened. When retransmission of the notification signal is stopped to reduce the power consumption, on the other hand, the reliability of the alarm system will decrease. In order to suppress a decrease in reliability while reducing the power consumption at the same time, the fire alarm according to this embodiment continues to retransmit the notification signal but stops the operation to receive the response signal when the number of times of failure to receive the response signal reaches a specified number of times.

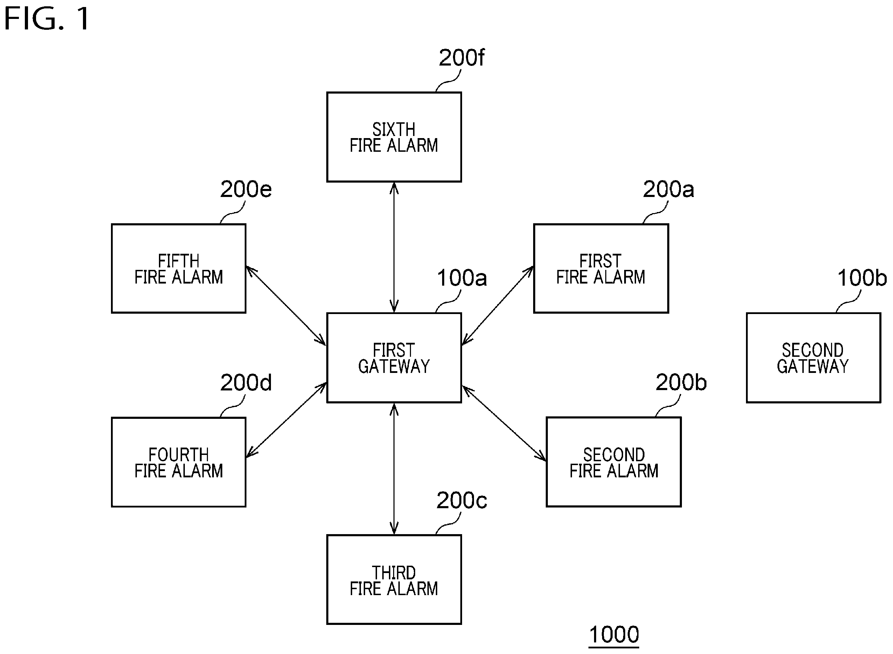

Fig. 1 shows a configuration of an alarm system 1000. The alarm system 1000 includes a first gateway 100a, a second gateway 100b, collectively referred to as a gateway 100, and a first fire alarm 200a to a sixth fire alarm 200f, collectively referred to as a fire alarm 200. The number of gateways 100 is not limited to "2", and the number of fire alarms 200 is not limited to "6".

The alarm system 1000 is a system applied to a facility such as a house, an office, and a commercial facility to detect a fire and alert that a fire has broken out. The plurality of fire alarm 200 are, for example, home fire alarms and are provided with fire detection sensors. The plurality of fire alarms 200 are provided on, for example, the ceilings of the facility but may be provided on the walls, etc.

The first fire alarm 200a to the sixth fire alarm 200f are connected to the first gateway 100a, and the first gateway 100a and each fire alarm 200 perform wireless communication. Further, a plurality of fire alarms 200 (not shown) are also connected to the second gateway 100b, and the second gateway 100b and each fire alarm 200 (not shown) perform wireless communication. An address is assigned to each of the gateway 100 and the fire alarm 200, and the address is used to specify a transmission source and a transmission destination of the signal. For example, the first gateway 100a stores the address of the first gateway 100a and the address of each of the first fire alarm 200a to the sixth fire alarm 200f, and the first fire alarm 200a stores the address of the first fire alarm 200a and the address of the first gateway 100a.

When the first gateway 100a transmits a signal to the first fire alarm 200a, the first gateway 100a includes, in the signal, the address of the first fire alarm 200a as the transmission source address and the address of the first fire alarm 200a as the transmission destination address. The first fire alarm 200a receives the signal. The first fire alarm 200a processes the signal when the transmission destination address included in the signal is the address of the first fire alarm 200a, and discards the signal when the transmission destination address is not the address of the first fire alarm 200a.

When the first fire alarm 200a transmits a signal to the first gateway 100a, the first fire alarm 200a includes, in the signal, the address of the first fire alarm 200a as the transmission source address and the address of the first gateway 100a as the transmission destination address. The first gateway 100a receives the signal. The first gateway 100a processes the signal when the transmission destination address included in the signal is the address of the first gateway 100a, and discards the signal when the transmission destination address is not the address of the first gateway 100a. The same process is also performed in other gateways 100 and the other fire alarms 200. When the fire alarm 200 is referred to as a "communication terminal apparatus", the gateway 100 is referred to as a "communication target apparatus".

In the alarm system 1000 having such a configuration, "periodic monitoring" and "fire detection" are performed. "Periodic monitoring" is a process for confirming that no abnormality has occurred in the alarm system 1000. In "periodic monitoring", the fire alarm 200 transmits a notification signal, and the gateway 100 that receives the notification signal transmits a response signal. "Periodic monitoring" is carried out periodically and, for example, every 24 hours.

"Fire detection" is a process in which one or more fire alarms 200 output an alarm when one or more fire alarms 200 detect an outbreak of a fire. In "fire detection", the fire alarm 200 that detects an outbreak of a fire transmits a result of detection to the gateway 100, and the gateway 100 identifies the fire alarm 200 caused to output an alarm, based on the transmission source address included in the result of detection. The correspondence between the address and information on the fire alarm 200 caused to output an alarm is stored in advance in the gateway 100. The gateway 100 transmits an instruction to output an alarm to the identified fire alarm 200, and the fire alarm 200 that receives the instruction to output an alarm outputs an alarm.

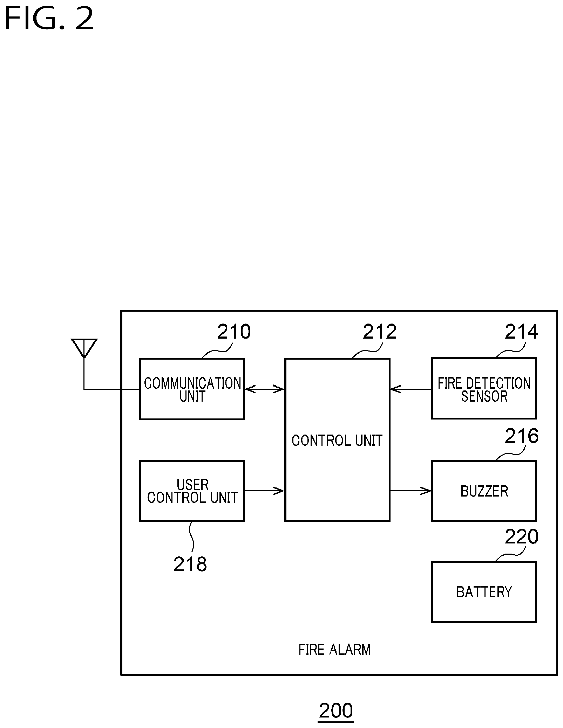

Fig. 2 shows a configuration of the fire alarm 200. The fire alarm 200 includes a communication unit 210, a control unit 212, a fire detection sensor 214, a buzzer 216, a user operation unit 218, and a battery 220. A publicly known technology may be used in the fire detection sensor 214. For example, the fire detection sensor 214 may be an optical smoke detection sensor and may detect a fire by detecting the smoke in a fire by utilizing diffuse reflection of light. For example, the fire detection sensor 214 may be a heat detection sensor and may detect a fire by detecting the heat in a fire. For example, the fire detection sensor 214 may be a carbon monoxide detection sensor and may detect a fire by detecting the density of carbon monoxide generated by combustion in a fire. For example, the fire detection sensor 214 may be an infrared detection sensor and may detect a fire by detecting infrared rays radiated by combustion in a fire.

The communication unit 210 communicates with the gateway 100 wirelessly. The control unit 212 controls the operation of the fire alarm 200 and, for example, processes a signal received by the communication unit 210 or generates a signal to be transmitted from the communication unit 210. Therefore, the control unit 212 stores the address of the gateway 100 to communicate to. The buzzer 216 can output a buzzer sound. The fire alarm 200 may be configured not to include the buzzer 216 and include the fire detection sensor 214. In other words, the fire alarm 200 may be configured to have the detection function and the communication function. The fire alarm 200 configured as described above can be said to be a sensor capable of alerting that a fire is detected.

The user operation unit 218 is an interface that can be manipulated by the user and is, for example, a button. When the user operation unit 218 receives a user operation input of a user, i.e., receives a user operation from outside, the user operation unit 218 outputs the user operation from the user to the control unit 212. The user operation received by the user operation unit 218 will be described later. The control unit 212 performs a process according to the user operation from the user operation unit 218. The battery 220 supplies power to the fire alarm 200. Thus, the battery 220 causes each component of the fire alarm 200, including the communication unit 210, to operate.

Hereinafter, the operation of the alarm system 1000 and, particularly periodic monitoring, will be described with reference to the first gateway 100a and the first fire alarm 200a of Fig. 1. The other gateways 100 and the other fire alarms 200 operate in the same way.

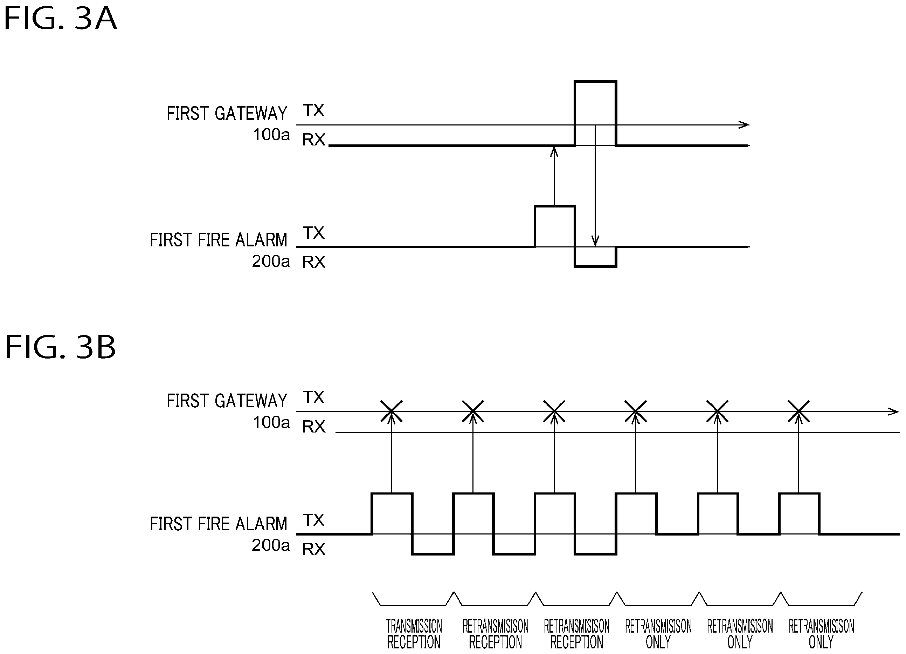

Figs. 3A-3B show an outline of an operation of the alarm system 1000. Fig. 3A shows the basic operation of "periodic monitoring" between the first gateway 100a and the first fire alarm 200a. The first gateway 100a, which is powered by a power supply, performs a reception operation (RX) for a period other than the period during which a transmission operation (TX) is performed. The communication unit 210 of the first fire alarm 200a performs a transmission operation (TX) and transmits the notification signal to the first gateway 100a. The first gateway 100a receives the notification signal transmitted from the first fire alarm 200a by performing the reception operation. When the first gateway 100a receives the notification signal, the first gateway 100a confirms that there is no abnormality in the first fire alarm 200a. Upon receiving the notification signal, the first gateway 100a performs the transmission operation and transmits the response signal in response to the notification signal to the first fire alarm 200a. The communication unit 210 of the first fire alarm 200a performs the reception operation (RX) after performing the transmission operation, and receives the response signal transmitted from the first gateway 100a. When the communication unit 210 receives the response signal, the control unit 212 confirms that there is no abnormality in communication with the first gateway 100a.

Fig. 3B shows a case in which the first gateway 100a fails to receive the notification signal in "periodic monitoring" like that of Fig. 3A. The first gateway 100a performs a reception operation. The communication unit 210 of the first fire alarm 200a performs a transmission operation and transmits the notification signal to the first gateway 100a. The first gateway 100a fails to receive the notification signal and so does not transmit the response signal. Therefore, the communication unit 210 of the first fire alarm 200a does not receive the response signal even if the communication unit 210 performs the reception operation after performing the transmission operation.

When the communication unit 210 fails to receive the response signal, the communication unit 210 performs a retransmission operation (TX) following the reception operation, and retransmits the notification signal to the first gateway 100a. The first gateway 100a fails to receive the notification signal and so does not transmit the response signal. Therefore, the communication unit 210 of the first fire alarm 200a does not receive the response signal even if the communication unit 210 performs the reception operation after performing the retransmission operation. Thus, when the communication unit 210 fails to receive the response signal in a combination of the transmission operation and the reception operation, the communication unit 210 performs a combination of the retransmission operation and the reception operation following the combination of the transmission operation and the reception operation. When the communication unit 210 receives the response signal in the reception operation, the communication unit 210 stops the retransmission operation, but the communication unit 210 performs the combination of the retransmission operation and the reception operation until the response signal is received in the reception operation. As described above, the power consumption of the first fire alarm 200a increases by repeating a combination of the retransmission operation and the reception operation.

In order to suppress an increase in the power consumption of the first fire alarm 200a, the communication unit 210 performs the retransmission operation and stops the reception operation when the number of times of failure to receive the response signal reaches a specified number of times (for example, "3 times"). That is, the communication unit 210 performs the retransmission operation and retransmits the notification signal to the first gateway 100a. Meanwhile, the communication unit 210 does not perform the reception operation after performing the retransmission operation. The communication unit 210 performs the retransmission operation a predetermined number of times and retransmits the notification signal to the first gateway 100a repeatedly.

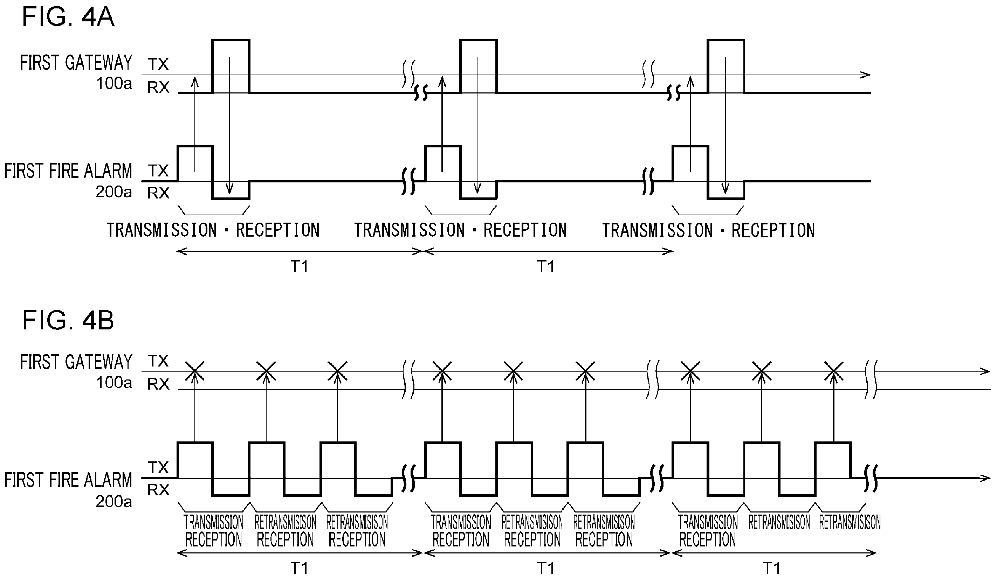

Figs. 4A-4B show an outline of another operation of the alarm system 1000. Referring to Fig. 4A, the basic operation of "periodic monitoring" shown in Fig. 3A is repeated periodically and, for example, every 24 hours. In Fig. 4A, the interval at which the notification signal should be transmitted periodically (for example, 24 hours) is shown as "T1". That is, the communication unit 210 of the first fire alarm 200a performs a combination of the transmission operation and the reception operation at intervals of "T1". The communication unit 210 transmits the notification signal to the first gateway 100a by the transmission operation, and receives the response signal from the first gateway 100a by the reception operation.

Fig. 4B shows a case in which the first gateway 100a fails to receive the notification signal in "periodic monitoring" like that of Fig. 4A. It is assumed here that the maximum number of times of retransmission for transmission of each notification signal is "2 times". The communication unit 210 of the first fire alarm 200a performs a combination of the transmission operation and the reception operation at the intervals of "T1", and transmits the notification signal to the first gateway 100a by the transmission operation.

When the communication unit 210 fails to receive the response signal in the reception operation, the communication unit 210 performs a combination of the retransmission operation and the reception operation provided that the number of times of failure to receive the response signal so far has not reached a specified number of times (hereinafter referred to as "the first specified number of times"). The first specified number of times is, for example, "6 times", which corresponds to "3 times" in Fig. 3B. The communication unit 210 retransmits the notification signal to the first gateway 100a by the retransmission operation and then performs the reception operation. The combination of the retransmission operation and the reception operation is repeated up to the maximum number of times until the response signal is received.

When the communication unit 210 fails to receive response signal in the reception operation, the communication unit 210 performs the retransmission operation and stops the reception operation provided that the number of times of failure to receive the response signal so far has reached the first specified number of times. The communication unit 210 retransmits the notification signal to the first gateway 100a by the retransmission operation and then does not perform the reception operation. Therefore, the first specified number of times can be said to be a specified number of times to determine to stop the reception operation.

Referring to Fig. 4B, the communication unit 210 of the first fire alarm 200a performs the transmission operation/reception operation, the retransmission operation/reception operation, and the retransmission operation/reception operation for the first notification signal. Since the maximum number of times of retransmission "2 times" is reached, the communication unit 210 does not further perform the retransmission operation. After "T1" has elapsed since the transmission of the first notification signal, the communication unit 210 performs the transmission operation/reception operation, the retransmission operation/reception operation, and the retransmission operation/reception operation for the second notification signal. Since the maximum number of times of retransmission "2 times" is reached, the communication unit 210 does not further perform the retransmission operation. At this stage, the number of times of failure to receive the response signal reaches the first specified number of times "6 times". After "T1" has elapsed since the transmission of the second notification signal, the communication unit 210 performs the transmission operation/reception operation for the third notification signal. Since the number of times of failure to receive the response signal has reached the first specified number of times "6 times", the communication unit 210 performs the retransmission operation and then further performs the retransmission operation. Meanwhile, the communication unit 210 does not perform the reception operation.

Further, the communication unit 210 may define a second specified number of times that is greater than the first specified number of times. When the number of times of failure to receive the response signal reaches the second specified number of times, the communication unit 210 also stops the transmission operation. The second specified number of times is, for example, "7 times". Referring to Fig. 4B, the number of times of failure to receive the response signal reaches the second specified number of times "7 times" after an elapse of "T1" since the transmission of the third notification signal, the communication unit 210 stops the transmission operation and does not transmit the fourth notification signal. The number of times of failure to receive the response signal according to the above description is returned to "0" when the communication unit 210 receives the response signal.

When the user operation unit 218 of Fig. 2 receives a user operation from the user, the control unit 212 causes the communication unit 210 to resume at least one of the transmission operation or the reception operation. When the reception operation is stopped and the transmission operation is not stopped, for example, the control unit 212 resumes the reception operation when the user operation unit 218 receives a user operation. Further, when the transmission operation and the reception operation are stopped, the control unit 212 resumes the transmission operation and the reception operation when the user operation unit 218 receives a user operation. At that time, the number of times of failure to receive the response signal is returned to "0".

The apparatus, the system, or the entity that executes the method according to the disclosure is provided with a computer. By causing the computer to run a program, the function of the apparatus, the system, or the entity that executes the method according to the disclosure is realized. The computer is comprised of a processor that operates in accordance with the program as a main hardware feature. The disclosure is non-limiting as to the type of the processor so long as the function is realized by running the program. The processor is comprised of one or a plurality of electronic circuits including a semiconductor integrated circuit (IC) or a large-scale integration (LSI). The plurality of electronic circuits may be integrated in one chip or provided in a plurality of chips. The plurality of chips may be aggregated in one apparatus or provided in a plurality of apparatuses. The program is recorded in a non-transitory recording medium such as a computer-readable ROM, optical disk, and hard disk drive. The program may be stored in a recording medium in advance or supplied to a recording medium via a wide area communication network including the Internet.

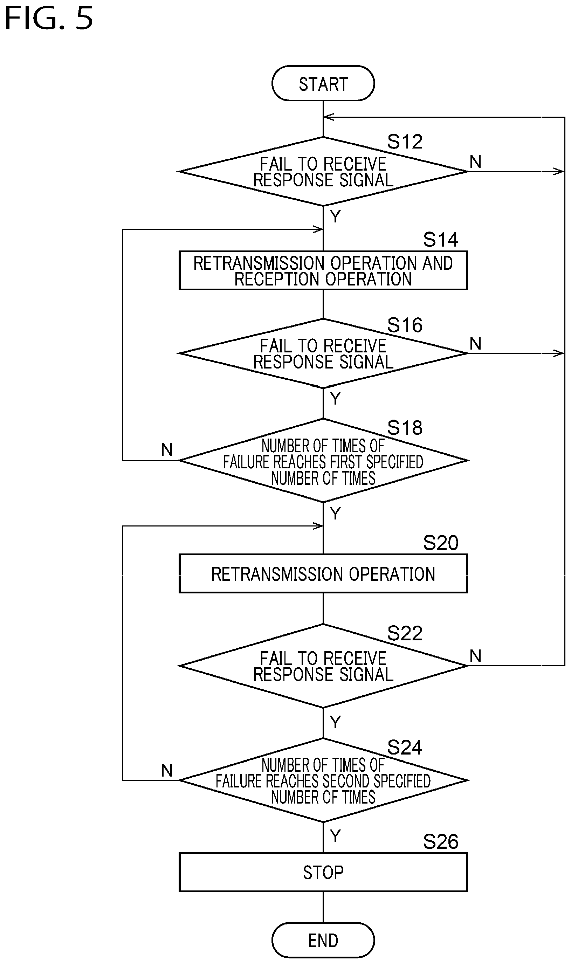

A description will be given of the operation of the fire alarm 200 having the configuration described above. Fig. 5 is a flowchart showing steps of an operation performed by the fire alarm 200. In this description, the transmission operation is omitted for the sake of clarity of the flowchart. When the communication unit 210 does not fail to receive the response signal (N in S12), the communication unit 210 returns to step 12. When the communication unit 210 fails to receive the response signal (Y in S12), the communication unit 210 performs the retransmission operation and the reception operation (S14). When the communication unit 210 does not fail to receive the response signal (N in S16), the communication unit 210 returns to step 12.

When the communication unit 210 fails to receive the response signal (Y in S16), the communication unit 210 returns to step 14 provided that the number of times of failure has not reached the first specified number of times (N in S18). When the number of times of failure reaches the first specified number (Y in S18), the communication unit 210 performs the retransmission operation (S20). When the communication unit 210 does not fail to receive the response signal (N in S22), the communication unit 210 returns to step 12. When the communication unit 210 fails to receive the response signal (Y in S22), the communication unit 210 returns to step 20 provided that the number of times of failure has not reached the second specified number of times (N in S24). When the number of times of failure reaches the second specified number (Y in S24), the communication unit 210 stops the operation (S26).

According to this exemplary embodiment, the retransmission operation is performed and the reception operation is stopped when the number of times of failure to receive the response signal reaches a specified number of times, so that it is possible to possible to suppresses a decrease in reliability while reducing the power consumption of the fire alarm 200 at the same time. Further, when the reception of the response signal fails, the retransmission operation and the reception operation are performed provided that the number of times of failure to receive the response signal so far has not reached the specified number of times, and the retransmission operation is performed and the reception operation is stopped provided that the number of times of failure to receive the response signal so far has reached the specified number of times. It is therefore possible to possible to suppresses a decrease in reliability while reducing the power consumption of the fire alarm 200 at the same time. Further, when the number of times of failure to receive the response signal reaches the second specified number of times, the transmission operation is also stopped, so that the power consumption of the fire alarm 200 can be reduced. Further, when the user operation unit 218 receives a user operation, at least one of the transmission operation or the reception operation is resumed, so that the fire alarm 200 can be restored to a normal state.

An embodiment of the present disclosure may be identified by the following items.

### (Item 1)

A wireless terminal apparatus (200) including:
a communication unit (212) that performs a transmission operation for transmitting a notification signal to a communication target apparatus (100) and a reception operation for receiving a response signal transmitted from the communication target apparatus (100) receiving the notification signal; and
a battery (220) for causing the communication unit (212) to operate,
wherein the communication unit (212) performs a retransmission operation for retransmitting the notification signal and the reception operation when the communication unit (212) fails to receive the response signal, and
wherein the communication unit (212) performs the retransmission operation and stops the reception operation when a number of times of failure to receive the response signal reaches a specified number of times.

### (Item 2)

The wireless terminal apparatus (200) according to Item 1,
wherein the communication unit (212) performs the transmission operation and the reception operation periodically,
wherein the communication unit (212) performs the retransmission operation and the reception operation when the communication unit (212) fails to receive the response signal in response to the notification signal transmitted periodically provided that the number of times of failure to receive the response signal so far has not reached the specified number of times, and
wherein the communication unit (212) performs the retransmission operation and stops the reception operation when the communication unit (212) fails to receive the response signal in response to the notification signal transmitted periodically provided that the number of times of failure to receive the response signal so far has reached the specified number of times.

### (Item 3)

The wireless terminal apparatus (200) according to Item 2,
wherein the specified number of times to determine to stop the reception operation is defined as a first specified number of times, and a second specified number of times larger than the first specified number of times is also defined, and
wherein the communication unit (212) also stops the transmission operation when the number of times of failure to receive the response signal reaches the second specified number of times.

### (Item 4)

The wireless terminal apparatus (200) according to Item 3, further including:
a user operation unit (218) that receives a user operation from outside,
wherein the user operation (218) resumes at least one of the transmission operation or the reception operation when the user operation unit (218) receives the user operation.

### (Exemplary embodiment 2)

Exemplary embodiment 2 will now be described. Like exemplary embodiment 1, exemplary embodiment 2 relates to an alarm system 1000 including a gateway 100 and a fire alarm 200. A purpose of exemplary embodiment 2 is also to suppress a decrease in reliability while reducing the power consumption of the fire alarm 200 at the same time. The fire alarm 200 according to this exemplary embodiment changes the transmission destination of the notification signal when the number of times of failure to receive the response signal reaches a specified number of times. The configuration of the alarm system 1000 according to exemplary embodiment 2 is of the same type as that of Fig. 1, and the configuration of the fire alarm 200 is of the same type as that of Fig. 2. The description below highlights a difference from the foregoing description.

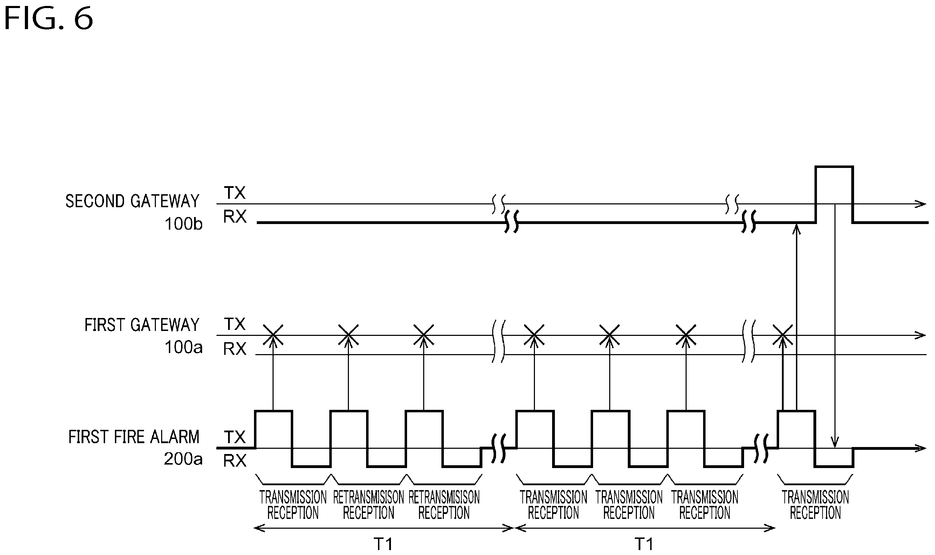

Fig. 6 shows an outline of an operation in the alarm system 1000. Referring to Fig. 6, the interval at which the notification signal should be transmitted periodically is shown as "T1", and the maximum number of times of retransmission for each notification signal transmission is "2 times". That is, the communication unit 210 of the first fire alarm 200a performs a combination of the transmission operation and the reception operation at intervals of "T1" and transmits the notification signal to the first gateway 100a by the transmission operation.

When the communication unit 210 fails to receive a response signal in the reception operation, the communication unit 210 performs a combination of the retransmission operation and the reception operation provided that the number of times of failure to receive the response signal so far has not reached a specified number of times (hereinafter referred to as "the third specified number of times"). The third specified number of times is, for example, "6 times". The communication unit 210 retransmits the notification signal to the first gateway 100a by the retransmission operation and then performs the reception operation. The combination of the retransmission operation and the reception operation is repeated up to the maximum number of times until a response signal is received.

When the communication unit 210 fails to receive the response signal in the reception operation, the communication unit 210 changes the transmission operation and the retransmission operation from unicast to broadcast to the first gateway 100a provided that the number of times of failure to receive the response signal so far has reached the third specified number of times. Switching from unicast to broadcast is made by changing the destination address included in the notification signal from the address of the first gateway 100a to the broadcast address. The broadcast address is an address for targeting an unspecified gateway 100. The communication unit 210 transmits or retransmits the notification signal by broadcasting. Further, the communication unit 210 performs the reception operation after transmitting or retransmitting the notification signal to the first gateway 100a. The combination of the retransmission operation and the reception operation is repeated up to the maximum number of times until a response signal is received.

Referring to Fig. 6, the communication unit 210 of the first fire alarm 200a performs the transmission operation/reception operation, the retransmission operation/reception operation, and the retransmission operation/reception operation for the first notification signal. Since the maximum number of times of retransmission "2 times" is reached, the communication unit 210 does not further perform the retransmission operation. After "T1" has elapsed since the transmission of the first notification signal, the communication unit 210 performs the transmission operation/reception operation, the retransmission operation/reception operation, and the retransmission operation/reception operation for the second notification signal. Since the maximum number of times of retransmission "2 times" is reached, the communication unit 210 does not further perform the retransmission operation. At this stage, the number of times of failure to receive the response signal reaches the third specified number of times "6 times".

When the number of times of failure to receive the response signal reaches the third specified number of times "6 times", the communication unit 210 switches the transmission of the notification signal from unicast to broadcast to the first gateway 100a. After "T1" has elapsed since the transmission of the second notification signal, the communication unit 210 performs the transmission operation by broadcasting and performs the reception operation for the third notification signal. The notification signal is received by the second gateway 100b, and the second gateway 100b transmits the response signal to the first fire alarm 200a. The communication unit 210 of the first fire alarm 200a receives the response signal from the second gateway 100b by the reception operation. Since the communication unit 210 has received the response signal, it does not retransmit the notification signal. If the response signal is not received and the notification signal is retransmitted, the notification signal is also retransmitted by broadcasting. The number of times of failure to receive the response signal according to the above description is returned to "0" when the communication unit 210 receives the response signal.

According to this exemplary embodiment, when the number of times of failure to receive the response signal reaches a specified number of times, the transmission operation and the retransmission operation are changed from unicast to broadcast to the gateway 100, so that the possibility that the notification signal is received by any of the gateways 100 can be improved. Further, since the possibility that the notification signal is received by any of the gateways 100 is improved, a decrease in reliability can be suppressed.

An embodiment of the present disclosure may be identified by the following items.

### (Item 5)

A wireless terminal apparatus (200) including:
a communication unit (212) that performs a transmission operation for transmitting a notification signal to a communication target apparatus (100) and a reception operation for receiving a response signal transmitted from the communication target apparatus (100) receiving the notification signal; and
a battery (220) for causing the communication unit (212) to operate,
wherein the communication unit (212) performs a retransmission operation for retransmitting the notification signal and the reception operation when the communication unit (212) fails to receive the response signal, and
wherein the communication unit (212) changes the transmission operation and the retransmission operation from unicast to broadcast to the communication target apparatus (100) when a number of times of failure to receive the response signal reaches a specified number of times.

### (Exemplary embodiment 3)

Exemplary embodiment 3 will now be described. Like the foregoing, exemplary embodiment 3 relates to an alarm system 1000 including a gateway 100 and a fire alarm 200. A purpose of exemplary embodiment 3 is also to suppress a decrease in reliability while reducing the power consumption of the fire alarm 200 at the same time. The fire alarm 200 according to this exemplary embodiment extends the interval of notification signals transmitted periodically when the number of times of failure to receive the response signal reaches a specified number of times. The configuration of the alarm system 1000 according to exemplary embodiment 3 is of the same type as that of Fig. 1, and the configuration of the fire alarm 200 is of the same type as that of Fig. 2. The description below highlights a difference from the foregoing description.

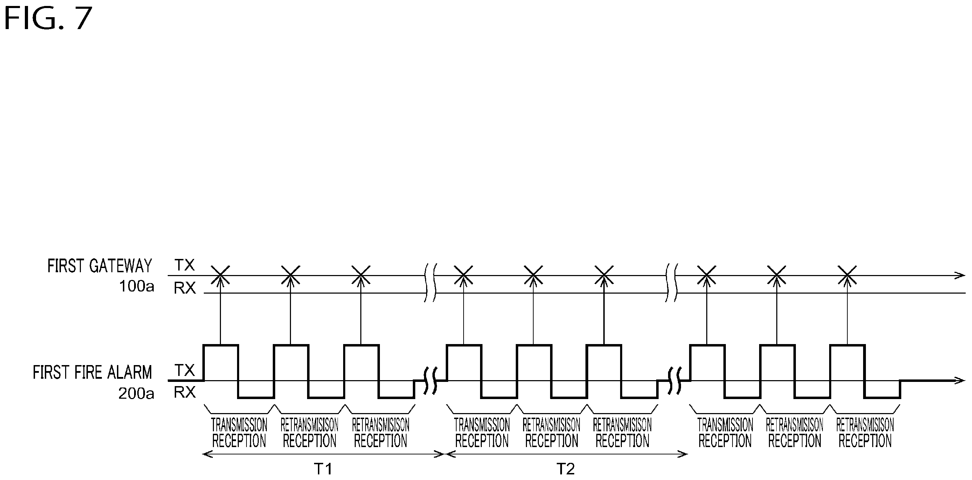

Fig. 7 shows an outline of an operation in the alarm system 1000. Referring to Fig. 7, the interval at which the notification signal should be transmitted periodically is shown as "T1", and the maximum number of times of retransmission for each notification signal transmission is "2 times". That is, the communication unit 210 of the first fire alarm 200a performs a combination of the transmission operation and the reception operation at intervals of "T1" and transmits the notification signal to the first gateway 100a by the transmission operation.

When the communication unit 210 fails to receive the response signal in the reception operation, the communication unit 210 performs a combination of the retransmission operation and the reception operation provided that the number of times of failure to receive the response signal so far has not reached a specified number of times (hereinafter referred to as "the fourth specified number of times"). The fourth specified number of times is, for example, "6 times". The communication unit 210 retransmits the notification signal to the first gateway 100a by the retransmission operation and then performs the reception operation. The combination of the retransmission operation and the reception operation is repeated up to the maximum number of times until the response signal is received.

When the reception of the response signal fails in the reception operation, the communication unit 210 changes the transmission interval of the notification signal from the first period to the second period provided that the number of times of failure to receive the response signal so far has reached the fourth specified number of times. The second period is longer than the first period and is, for example, 30 hours. In Fig. 7, the second period is shown as "T2". The communication unit 210 performs a combination of the transmission operation and the reception operation at intervals of "T2", and transmits the notification signal to the first gateway 100a by the transmission operation. The combination of the retransmission operation and the reception operation is repeated up to the maximum number of times until the response signal is received.

Referring to Fig. 7, the communication unit 210 of the first fire alarm 200a performs the transmission operation/reception operation, the retransmission operation/reception operation, and the retransmission operation/reception operation for the first notification signal. Since the maximum number of times of retransmission "2 times" is reached, the communication unit 210 does not further perform the retransmission operation. After "T1" has elapsed since the transmission of the first notification signal, the communication unit 210 performs the transmission operation/reception operation, the retransmission operation/reception operation, and the retransmission operation/reception operation for the second notification signal. Since the maximum number of times of retransmission "2 times" is reached, the communication unit 210 does not further perform the retransmission operation. At this stage, the number of times of failure to receive the response signal reaches the fourth specified number of times "6 times".

When the number of times of failure to receive the response signal reaches the fourth specified number of times "6 times", the communication unit 210 changes the transmission interval of the notification signal from the first period "T1" to the second period "T2". After "T2" has elapsed since the transmission of the second notification signal, the communication unit 210 performs the transmission operation/reception operation, the retransmission operation/reception operation, and the retransmission operation/reception operation for the third notification signal. Since the maximum number of times of retransmission "2 times" is reached, the communication unit 210 does not further perform the retransmission operation. The number of times of failure to receive the response signal according to the above description is returned to "0" when the communication unit 210 receives the response signal.

According to this exemplar embodiment, the first period is changed to the second period that is longer than the first period when the number of times of failure to receive the response signal reaches a specified number of times. It is therefore possible to suppress a decrease in reliability while reducing the power consumption of the fire alarm 200 at the same time.

An embodiment of the present disclosure may be identified by the following items.

### (Item 6)

A wireless terminal apparatus (200) including:
a communication unit (212) that periodically performs, at intervals of a first period, a transmission operation for transmitting a notification signal to a communication target apparatus (100) and a reception operation for receiving a response signal transmitted from the communication target apparatus (100) receiving the notification signal; and
a battery (220) for causing the communication unit (212) to operate, wherein the communication unit (212) performs a retransmission operation for retransmitting the notification signal and the reception operation when the communication unit (212) fails to receive the response signal, and
wherein the communication unit (212) changes the first period to a second period longer than the first period when a number of times of failure to receive the response signal reaches a specified number of times.

### (Exemplary embodiment 4)

Exemplary embodiment 4 will now be described. Like the foregoing, exemplary embodiment 4 relates to an alarm system 1000 including a gateway 100 and a fire alarm 200. A purpose of exemplary embodiment 4 is also to suppress a decrease in reliability while reducing the power consumption of the fire alarm 200 at the same time. The fire alarm 200 according to this exemplary embodiment reduces the maximum number of times of retransmission when the number of times of failure to receive the response signal reaches a specified number of times. The configuration of the alarm system 1000 according to exemplary embodiment 4 is of the same type as that of Fig. 1, and the configuration of the fire alarm 200 is of the same type as that of Fig. 2. The description below highlights a difference from the foregoing description.

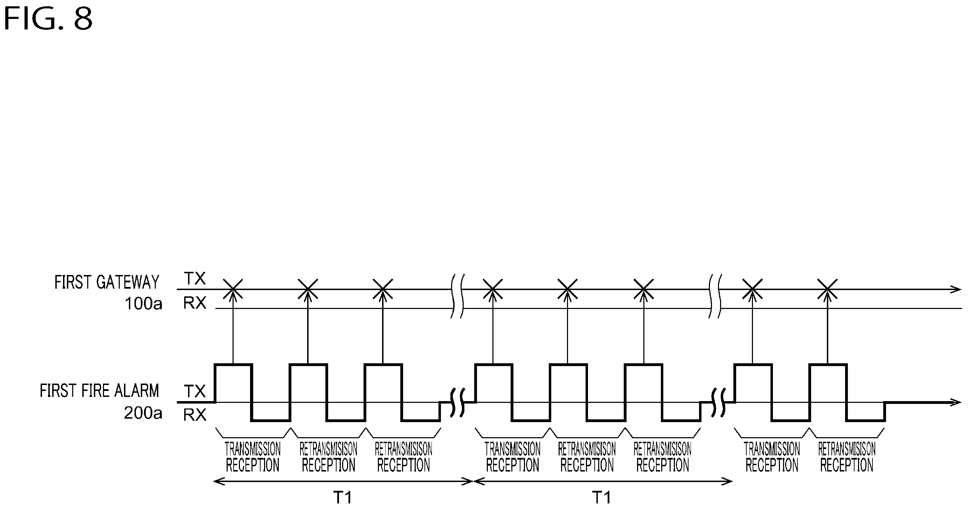

Fig. 8 shows an outline of an operation in the alarm system 1000. Referring to Fig. 8, the interval at which the notification signal should be transmitted periodically is shown as "T1", and the maximum number of times of retransmission for each notification signal transmission is "2 times". That is, the communication unit 210 of the first fire alarm 200a performs a combination of the transmission operation and the reception operation at intervals of "T1" and transmits the notification signal to the first gateway 100a by the transmission operation.

When the communication unit 210 fails to receive the response signal in the reception operation, the communication unit 210 performs a combination of the retransmission operation and the reception operation provided that the number of times of failure to receive the response signal so far has not reached a specified number of times (hereinafter referred to as "the fifth specified number of times"). The fifth specified number of times is, for example, "6 times". The communication unit 210 retransmits the notification signal to the first gateway 100a by the retransmission operation and then performs the reception operation. The combination of the retransmission operation and the reception operation is repeated up to the maximum number of times until the response signal is received.

When the communication unit 210 fails to receive the response signal in the reception operation, the communication unit 210 changes the maximum number of times of retransmission from "2 times" to "1 time" provided that the number of times of failure to receive the response signal so far has reached the fifth specified number of times. When the maximum number of times of retransmission "2 times" is referred to as the "first number of times", the maximum number of times of retransmission "1 time" is called the "second number of times". The second number of times is configured to be smaller than the first number of times. The communication unit 210 performs a combination of the transmission operation and the reception operation at intervals of "T1", and transmits the notification signal to the first gateway 100a by the transmission operation. The combination of the retransmission operation and the reception operation is repeated up to the second number of times until the response signal is received.

Referring to Fig. 8, the communication unit 210 of the first fire alarm 200a performs the transmission operation/reception operation, the retransmission operation/reception operation, and the retransmission operation/reception operation for the first notification signal. Since the maximum number of times of retransmission "2 times" is reached, the communication unit 210 does not further perform the retransmission operation. After "T1" has elapsed since the transmission of the first notification signal, the communication unit 210 performs the transmission operation/reception operation, the retransmission operation/reception operation, and the retransmission operation/reception operation for the second notification signal. Since the maximum number of times of retransmission "2 times" is reached, the communication unit 210 does not further perform the retransmission operation. At this stage, the number of times of failure to receive the response signal reaches the fifth specified number of times "6 times".

When the number of times of failure to receive the response signal reaches the fifth specified number of times "6 times", the communication unit 210 changes the maximum number of times of retransmission from the first number of times "2 times" to the second number of times "1 time". After "T1" has elapsed since the transmission of the second notification signal, the communication unit 210 performs the transmission operation/reception operation and the retransmission operation/reception operation for the third notification signal. Since the maximum number of times of retransmission "1 time" is reached, the communication unit 210 does not further perform the retransmission operation. The number of times of failure to receive the response signal according to the above description is returned to "0" when the communication unit 210 receives the response signal.

According to this exemplary embodiment, when the number of times of failure to receive the response signal reaches a specified number of times, the first number of times is changed to the second number of times that is smaller than the first number of times, so that power consumption can be reduced by reducing the number of times of retransmission.

An embodiment of the present disclosure may be identified by the following items.

### (Item 7)

A wireless terminal apparatus (200) including:
a communication unit (212) that periodically performs a transmission operation for transmitting a notification signal to a communication target apparatus (100) and a reception operation for receiving a response signal transmitted from the communication target apparatus (100) receiving the notification signal; and
a battery (220) for causing the communication unit (212) to operate,
wherein the communication unit (212) performs a retransmission operation for retransmitting the notification signal and the reception operation a first number of times when the communication unit (212) fails to receive the response signal, and
wherein the communication unit (212) changes the first number of times to a second number of times smaller than the first number of times when a number of times of failure to receive the response signal reaches a specified number of times.

### [Item 8]

A fire alarm (200) including:
the wireless terminal apparatus (200) according to any one of Items 1 to 7; and
a detection unit (214) that detects an outbreak of a fire.

The present disclosure has been described above based on an exemplary embodiment. The exemplary embodiment intended to be illustrative only and it will be understood by those skilled in the art that various modifications to combinations of constituting elements and processes are possible and that such modifications are also within the scope of the present disclosure.

Any two or more of exemplary embodiment 1 to exemplary embodiment 4 may be combined. In exemplary embodiment 1 to exemplary embodiment 4, the first specified number of times, the third specified number of times, the fourth specified number of times, and the fifth specified number of times are all "6 times". When exemplary embodiment 1 to exemplary embodiment 4 are combined, the first specified number of times, the third specified number of times, the fourth specified number of times, and the fifth specified number of times may be different from each other. For example, the first specified number of times<the third specified number of times<the fourth specified number of times<the fifth specified number of times. When the number of times of failure to receive the response signal reaches the first specified number of times, the communication unit 210 changes the combination of the retransmission operation and the reception operation to only the retransmission operation. When the number of times of failure to receive the response signal reaches the third specified number of times, the communication unit 210 changes from unicast to broadcast. When the number of times of failure to receive the response signal reaches the fourth specified number of times, the communication unit 210 changes the first period to the second period. When the number of times of failure to receive the response signal reaches the fifth specified number of times, the communication unit 210 changes the first number of times to the second number of times. According to this variation, the flexibility in the configuration is improved.

In exemplary embodiment 1 to exemplary embodiment 4, the alarm system 1000 includes the fire alarm 200. Alternatively, however, the fire alarm 200 may only be provided with the function of detecting a fire. Instead of the fire alarm 200 for detecting a fire, sensors for detecting flood damage, earthquakes, gas leakage, or generation of CO (carbon monoxide) due to imperfect combustion may be provided. According to this variation, the flexibility in the configuration is improved.

### [REFERENCE SIGNS LIST]

100 gateway (communication target apparatus), 200 fire alarm (wireless terminal apparatus), 210 communication unit, 212 control unit, 214 fire detection sensor, 216 buzzer, 218 user operation unit, 220 battery, 1000 alarm system

## Claims

1. A wireless terminal apparatus (200) comprising:
a communication unit (210) that performs a transmission operation for transmitting a notification signal to a communication target apparatus (100) and a reception operation for receiving a response signal transmitted from the communication target apparatus (100) receiving the notification signal; and
a battery (220) for causing the communication unit (210) to operate,
wherein the communication unit (210) performs a retransmission operation for retransmitting the notification signal and the reception operation when the communication unit (212) fails to receive the response signal, and
wherein the communication unit (210) is configured such that: 1)
when a number of times of failure to receive the response signal reaches a specified number of times, the communication unit (210) continues to retransmit the notification signal but stops the reception operation; or 2)
the communication unit (210) performs a combination of the retransmission operation and the reception operation up to a first number of times provided that a number of times of failure to receive the response signal so far has not reached a specified number of times, and the communication unit (210) changes the first number of times to a second number of times smaller than the first number of times when a number of times of failure to receive the response signal reaches a specified number of times.

2. The wireless terminal apparatus (200) according to claim 1,
wherein the communication unit (210) performs the transmission operation and the reception operation periodically,
wherein the communication unit (210) performs the retransmission operation and the reception operation when the communication unit (210) fails to receive the response signal in response to the notification signal transmitted periodically provided that the number of times of failure to receive the response signal so far has not reached the specified number of times, and
wherein the communication unit (210) performs the retransmission operation and stops the reception operation when the communication unit (210) fails to receive the response signal in response to the notification signal transmitted periodically provided that the number of times of failure to receive the response signal so far has reached the specified number of times.

3. The wireless terminal apparatus (200) according to claim 2,
wherein the specified number of times to determine to stop the reception operation is defined as a first specified number of times, and a second specified number of times larger than the first specified number of times is also defined, and
wherein the communication unit (210) also stops the transmission operation when the number of times of failure to receive the response signal reaches the second specified number of times.

4. The wireless terminal apparatus (200) according to claim 3, further comprising:
a user operation unit (218) that receives a user operation from outside,
wherein the user operation (218) resumes at least one of the transmission operation or the reception operation when the user operation unit (218) receives the user operation.

## Patentansprüche

1. Drahtloses Endgerät (200), aufweisend:
eine Kommunikationseinheit (210), die einen Sendevorgang zum Senden eines Benachrichtigungssignals an eine Kommunikationszielvorrichtung (100) und einen Empfangsvorgang zum Empfangen eines Antwortsignals, das von der Kommunikationszielvorrichtung (100) gesendet wird, die das Benachrichtigungssignal empfängt, durchführt; und
eine Batterie (220) zum Betreiben der Kommunikationseinheit (210),
wobei die Kommunikationseinheit (210) einen erneuten Sendevorgang zum erneuten Senden des Benachrichtigungssignals und den Empfangsvorgang durchführt, wenn die Kommunikationseinheit (212) das Antwortsignal nicht empfangen kann, und
wobei die Kommunikationseinheit (210) so konfiguriert ist, dass:
1) wenn eine Anzahl von Fehlversuchen beim Empfang des Antwortsignals eine festgelegte Anzahl erreicht, die Kommunikationseinheit (210) damit fortfährt, das Benachrichtigungssignal erneut zu senden, aber den Empfangsvorgang anhält;
oder
2) die Kommunikationseinheit (210) eine Kombination aus dem erneuten Sendevorgang und dem Empfangsvorgang bis zu einer ersten Anzahl durchführt, vorausgesetzt, dass die Anzahl der bisherigen Fehlversuche beim Empfang des Antwortsignals eine festgelegte Anzahl nicht erreicht hat, und die Kommunikationseinheit (210) die erste Anzahl in eine zweite Anzahl ändert, die kleiner als die erste Anzahl ist, wenn die Anzahl der Fehlversuche beim Empfang des Antwortsignals eine festgelegte Anzahl erreicht.

2. Drahtloses Endgerät (200) nach Anspruch 1,
wobei die Kommunikationseinheit (210) den Sendevorgang und den Empfangsvorgang periodisch durchführt,
wobei die Kommunikationseinheit (210) den erneuten Sendevorgang und den Empfangsvorgang durchführt, wenn die Kommunikationseinheit (210) das Antwortsignal als Reaktion auf das periodisch gesendete Benachrichtigungssignal nicht empfangen kann, vorausgesetzt, dass die Anzahl der bisherigen Fehlversuche beim Empfang des Antwortsignals die festgelegte Anzahl nicht erreicht hat, und
wobei die Kommunikationseinheit (210) den erneuten Sendevorgang durchführt und den Empfangsvorgang anhält, wenn die Kommunikationseinheit (210) das Antwortsignal als Reaktion auf das periodisch gesendete Benachrichtigungssignal nicht empfangen kann, vorausgesetzt, dass die Anzahl der bisherigen Fehlversuche beim Empfang des Antwortsignals die festgelegte Anzahl erreicht hat.

3. Drahtloses Endgerät (200) nach Anspruch 2,
wobei die festgelegte Anzahl des Bestimmens des Anhaltens des Empfangsvorgangs als eine erste festgelegte Anzahl definiert ist und eine zweite festgelegte Anzahl, die größer ist als die erste festgelegte Anzahl, ebenfalls definiert ist, und
wobei die Kommunikationseinheit (210) auch den Sendevorgang anhält, wenn die Anzahl der Fehlversuche beim Empfang des Antwortsignals die zweite festgelegte Anzahl erreicht.

4. Drahtloses Endgerät (200) nach Anspruch 3, ferner aufweisend:
eine Benutzerbedieneinheit (218), die eine Benutzerbedienung von außen empfängt,
wobei die Benutzerbedienung (218) mindestens eines von dem Sendevorgang oder dem Empfangsvorgang wiederaufnimmt, wenn die Benutzerbedieneinheit (218) die Benutzerbedienung empfängt.

## Revendications

1. Un appareil terminal sans fil (200) comprenant :
une unité de communication (210) qui effectue une opération de transmission pour transmettre un signal de notification à un appareil cible de communication (100) et une opération de réception pour recevoir un signal de réponse transmis par l'appareil cible de communication (100) qui reçoit le signal de notification ; et
une batterie (220) destinée à faire fonctionner l'unité de communication (210),
dans lequel l'appareil est **caractérisé en ce que** l'unité de communication (210) effectue une opération de retransmission pour retransmettre le signal de notification et l'opération de réception lorsque l'unité de communication (212) ne parvient pas à recevoir le signal de réponse, et
dans lequel l'appareil est **caractérisé en ce que** l'unité de communication (210) est configurée de sorte que :
1) lorsqu'un nombre de fois d'échec de réception du signal de réponse atteint un nombre de fois spécifié, l'unité de communication (210) continue à retransmettre le signal de notification mais arrête l'opération de réception ; ou
2) l'unité de communication (210) effectue une combinaison de l'opération de retransmission et de l'opération de réception jusqu'à un premier nombre de fois à condition qu'un nombre de fois d'échec de réception du signal de réponse jusqu'à présent n'ait pas atteint un nombre de fois spécifié, et l'unité de communication (210) modifie le premier nombre de fois en un second nombre de fois inférieur au premier nombre de fois lorsqu'un nombre de fois d'échec de réception du signal de réponse atteint un nombre de fois spécifié.

2. L'appareil terminal sans fil (200) selon la revendication 1,
dans lequel l'appareil est **caractérisé en ce que** l'unité de communication (210) effectue l'opération de transmission et l'opération de réception périodiquement,
dans lequel l'appareil est **caractérisé en ce que** l'unité de communication (210) effectue l'opération de retransmission et l'opération de réception lorsque l'unité de communication (210) ne parvient pas à recevoir le signal de réponse en réponse au signal de notification transmis périodiquement à condition que le nombre de fois d'échec de réception du signal de réponse jusqu'à présent n'ait pas atteint le nombre de fois spécifié, et
dans lequel l'appareil est **caractérisé en ce que** l'unité de communication (210) effectue l'opération de retransmission et arrête l'opération de réception lorsque l'unité de communication (210) ne parvient pas à recevoir le signal de réponse en réponse au signal de notification transmis périodiquement à condition que le nombre de fois d'échec de réception du signal de réponse jusqu'à présent ait atteint le nombre de fois spécifié.

3. L'appareil terminal sans fil (200) selon la revendication 2,
dans lequel l'appareil est **caractérisé en ce que** le nombre de fois spécifié pour déterminer d'arrêter l'opération de réception est défini comme un premier nombre de fois spécifié, et un second nombre de fois spécifié supérieur au premier nombre de fois spécifié est également défini, et
dans lequel l'appareil est **caractérisé en ce que** l'unité de communication (210) arrête également l'opération de transmission lorsque le nombre de fois d'échec de réception du signal de réponse atteint le second nombre de fois spécifié.

4. L'appareil terminal sans fil (200) selon la revendication 3, comprenant en outre :
une unité d'opération utilisateur (218) qui reçoit une opération utilisateur de l'extérieur,
dans lequel appareil est **caractérisé en ce que** l'opération utilisateur (218) reprend au moins l'une de l'opération de transmission ou de l'opération de réception lorsque l'unité d'opération utilisateur (218) reçoit l'opération utilisateur.
